# EUROPEAN PATENT APPLICATION

(11) **EP 4 694 415 A1**
(43) Date of publication of application: **11.02.2026**
(21) Application number: 23929493.7
(22) Date of filing: 31.03.2023
(51) Int. Cl.: H04W 64/00

(54) **INFORMATION PROCESSING METHODS AND APPARATUSES, COMMUNICATION DEVICE AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2023/085725
(87) International publication number: WO 2024/197910

(57) **Abstract**

Provided in the embodiments of the present disclosure are information processing methods and apparatuses, a communication device and a storage medium. An information processing method executed by a core network device may comprise: receiving first information sent by a base station, wherein the first information is used for determining a round-trip time (RTT) of a user equipment (UE) with second information from the UE, and the second information comprises a measurement value obtained by the UE executing positioning measurement.

## Description

### TECHNICAL FIELD

The disclosure relates to the field of wireless communication technology, in particular to an information processing method and apparatus, a communication device and a storage medium.

### BACKGROUND

**In** researches on wireless communication technology, non-terrestrial network (NTN) communication, such as satellite communication, has been applied to more and more application scenarios for its characteristics such as wide coverage, strong disaster resistance and large capacity. The satellite communication refers to communication between radio communication devices on the ground via a satellite as a relay. A satellite communication system consists of a satellite portion and a ground portion.

**In** the scenarios of satellite communication, a user equipment (UE) is supported to perform position reporting. The UE obtains its own position information based on a global navigation satellite system (GNSS) and reports the position information to a network. However, in this way, the position information reported by the UE may be false, or GNSS information of the UE may be tampered with. Therefore, the position information reported by the UE is unreliable for the network side.

### SUMMARY

The embodiments of the disclosure provide an information processing method and apparatus, a communication device and a storage medium.

According to a first aspect of the embodiments of the disclosure, an information processing method is provided. The method is performed by a core network device, and includes:

receiving first information sent by a base station, in which the first information is configured, together with second information from a UE, to determine a round trip time (RTT) of the UE, and the second information includes a measurement value obtained by the UE performing positioning measurement.

According to a second aspect of the embodiments of the disclosure, an information processing method is provided. The method is performed by a base station, and includes:
sending, by the base station, first information to a core network device, in which the first information is configured, together with second information sent by a UE to the core network device, to determine an RTT of the UE, and the second information includes a measurement value obtained by the UE performing positioning measurement.

According to a third aspect of the embodiments of the disclosure, an information processing method is provided. The method is performed by a UE, and includes:
sending, by the UE, second information to a core network device, in which the second information includes a measurement value obtained by the UE performing positioning measurement, and the second information is configured, together with first information from a base station, to determine an RTT of the UE.

According to a fourth aspect of the embodiments of the disclosure, an information processing apparatus is provided. The apparatus is applied to a core network device, and includes:
a receiving module, configured to receive first information sent by a base station, in which the first information is configured, together with second information from a UE, to determine an RTT of the UE, and the second information includes a measurement value obtained by the UE performing positioning measurement.

According to a fifth aspect of the embodiments of the disclosure, an information processing apparatus is provided. The apparatus is applied to a base station, and includes:
a first sending module, configured to send first information to a core network device, in which the first information is configured, together with second information sent by a UE to the core network device, to determine an RTT of the UE, and the second information includes a measurement value obtained by the UE performing positioning measurement.

According to a sixth aspect of the embodiments of the disclosure, an information processing apparatus is provided. The apparatus is applied to a UE, and includes:
a second sending module, configured to send second information to a core network device, in which the second information includes a measurement value obtained by the UE performing positioning measurement, and the second information is configured, together with first information from a base station, to determine an RTT of the UE.

According to a seventh aspect of the embodiments of the disclosure, a communication system is provided. The communication system includes a base station, a UE and a core network device. The core network device is configured to implement the information processing method provided by the first aspect, the base station is configured to implement the information processing method provided by the second aspect, and the UE is configured to implement the information processing method provided by the third aspect.

According to an eighth aspect of the embodiments of the disclosure, a communication device is provided. The communication device includes:
a processor; and
a memory for storing instructions executable by the processor;
in which the processor is configured to implement the information processing method of the first aspect, the information processing method of the second aspect, or the information processing method of the third aspect by executing the executable instructions.

According to a ninth aspect of the disclosure, a computer storage medium is provided. The computer storage medium stores a computer executable program, and when the computer executable program is executed by a processor, the information processing method of the first aspect, the information processing method of the second aspect, or the information processing method of the third aspect is implemented.

The technical solution provided by the embodiments of the disclosure includes the following beneficial effects.

The core network device receives the first information sent by the base station. The first information is configured, together with the second information from the UE, to determine the RTT of the UE. The second information includes the measurement value obtained by the UE performing the positioning measurement. Therefore, the core network device may obtain the RTT of the UE by combining the first information from the base station and the second information from the UE. Compared with the position information reported by the UE, this enables the network-side device to use the RTT of the UE to obtain the position information of the UE with higher reliability, thereby verifying whether the position information reported by the UE is accurate.

It is understandable that the foregoing general description and the following detailed descriptions are exemplary and explanatory only and do not limit the embodiments of the disclosure.

### BRIEF DESCRIPTION OF THE DRAWINGS

The accompanying drawings, which are incorporated in and constitute a part of this specification, illustrate embodiments consistent with the disclosure and, together with the specification, serve to explain principles of the embodiments of the disclosure.
FIG. 1 is a schematic diagram of a wireless communication system according to an example embodiment.
FIG. 2 is a schematic flowchart of an information processing method according to an example embodiment.
FIG. 3 is a schematic flowchart of an information processing method according to an example embodiment.
FIG. 4 is a schematic flowchart of an information processing method according to an example embodiment.
FIG. 5 is a schematic diagram of multi-round trip time (multi-RTT) measurement according to an example embodiment.
FIG. 6 is a schematic diagram of an information processing apparatus according to an example embodiment.
FIG. 7 is a schematic diagram of an information processing apparatus according to an example embodiment.
FIG. 8 is a schematic diagram of an information processing apparatus according to an example embodiment.
FIG. 9 is a schematic diagram of a UE according to an example embodiment.
FIG. 10 is a schematic diagram of a communication device according to an example embodiment.

### DETAILED DESCRIPTION

Reference is made in detail to embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the embodiments of the disclosure. Instead, they are merely examples of apparatuses and methods consistent with aspects related to the embodiments of the disclosure.

The terms used in the embodiments of the disclosure are only for the purpose of describing specific embodiments, and are not intended to limit the embodiments of the disclosure. The singular forms of "a" and "the" used in the disclosure are also intended to include plural forms, unless the context clearly indicates other meanings. It is understandable that the term "and/or" as used herein refers to and includes any or all possible combinations of one or more associated listed items.

It is understandable that although the terms "first", "second" and "third" may be used in the embodiments of the disclosure to describe various types of information, the information should not be limited to these terms. These terms are only used to distinguish the same type of information from each other. For example, without departing from the scope of the embodiments of the disclosure, the first information may also be referred to as the second information, and similarly, the second information may also be referred to as the first information. Depending on the context, the term "if" as used herein may be interpreted as "when", "while" or "in response to determining".

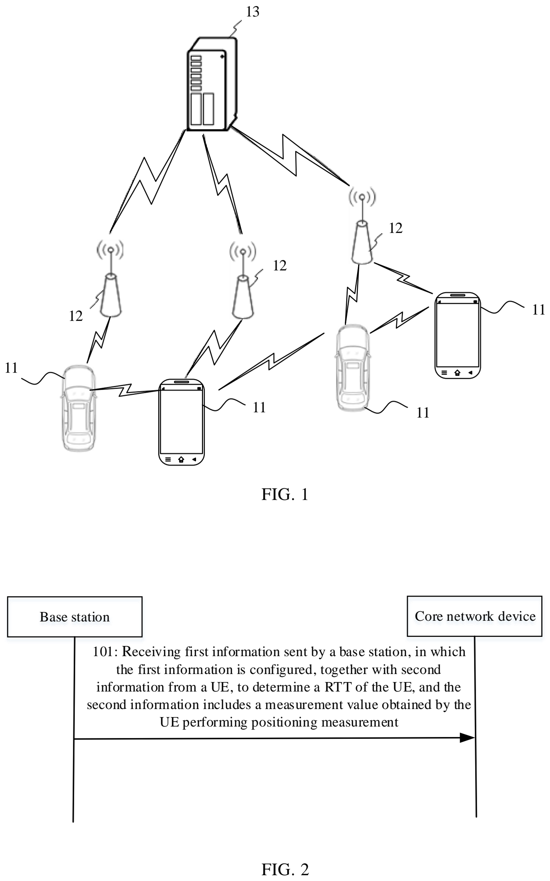

FIG. 1 is a schematic diagram of a wireless communication system illustrated according to an example embodiment. To assist in understanding the embodiments of the disclosure, firstly, a wireless communication system to which the embodiments of the disclosure apply is described in detail by taking the wireless communication system in FIG. 1 as an example. It should be noted that the solution in the embodiments of the disclosure may also be applied to other wireless communication systems, and the names of devices in the system are replaced by names of corresponding functions in the other wireless communication systems.

As illustrated in FIG. 1, the wireless communication system is a communication system based on cellular mobile communication technology. The system includes several UEs 11, several base stations 12 and a network management device 13.

The UE 11 may be a device that provides voice and/or data connectivity to a user. The UE 11 may communicate with one or more core networks via a radio access network (RAN). The UE 11 may be an internet of things (IoT) UE, such as a sensor device, a cell phone (or "cellular" phone), and a computer with the IoT UE. For example, the UE 11 may be a stationary, portable, pocket-sized, handheld, computer-built, or vehicle-mounted device, such as, a station (STA), a subscriber unit, a subscriber station, a mobile station, a mobile, a remote station, an access point, a remote terminal, an access terminal, a user terminal, a user agent, a user device, or a user equipment. Alternatively, the UE 11 may be a wearable device, a virtual reality (VR) device, an augmented reality (AR) device or a VR/AR hybrid headset. Alternatively, the UE 11 may be an unmanned aerial vehicle device. Alternatively, the UE 11 may be an in-vehicle device, for example, a driving computer having wireless communication function or a wireless UE external to the driving computer. Alternatively, the UE 11 may be a roadside device, for example, a street light, a signal light, or other roadside devices having a wireless communication function.

The base station 12 may be a network side device in the wireless communication system. The wireless communication system may be the 4th Generation (4G) mobile communication system, also known as long term evolution (LTE) system. Alternatively, the wireless communication system may also be a 5G system, also known as new radio (NR) system or 5G NR system. Alternatively, the wireless communication system may be any next generation system of the 5G system. An access network in the 5G system may be called new generation-RAN (NG-RAN).

The base station 12 may be an evolved base station (eNB) employed in the 4G system. Alternatively, the base station 12 may be a base station (gNB) with a centralized distributed architecture employed in the 5G system. When the base station 12 adopts the centralized distributed architecture, the base station 12 usually includes a central unit (CU) and at least two distributed units (DUs). The CU is equipped with protocol stacks of a packet data convergence protocol (PDCP) layer, a radio link control (RLC) layer, and a media access control (MAC) layer. The DU is equipped with a protocol stack of a physical (PHY) layer, and the specific implementation of the base station 12 is not limited in the embodiments of the disclosure.

A wireless connection may be established between the base station 12 and the UE 11 via a wireless radio interface. In different implementations, the wireless radio interface is a wireless radio interface based on the 4G standard. Alternatively, the wireless radio interface is a wireless radio interface based on the 5G standard, such as a NR. Alternatively, the wireless radio interface may be a wireless radio interface based on the standard of the next-generation mobile communication network technology of 5G.

The base station 12 may be located in a communication system integrated with a satellite communication system, and is capable of providing connecting services for satellites as well as connect satellite to a core network. For example, the base station 12 may be an access network device with a satellite gateway function in the communication system, such as a gateway device, a ground station device, and a non-terrestrial networks gateway (NTN-Gateway).

**In** some examples, an end to end (E2E) connection or a device to device (D2D) connection may be established between UEs 11. Examples include scenarios such as vehicle to vehicle (V2V) communication, vehicle to infrastructure (V2I) communication, and vehicle to pedestrian (V2P) communication in vehicle to everything (V2X) communication.

**In** an embodiment, the above wireless communication system may also include the network management device 13. The plurality of base stations 12 are respectively connected to the network management device 13.

**In** an embodiment, the network management device 13 may be a core network device in the wireless communication system. For example, the network management device 13 is a mobility management entity (MME) in an evolved packet core (EPC). Alternatively, the network management device may be a serving gateway (SGW), a public data network gateway (PGW), a policy and charging rules function (PCRF) or a home subscriber server (HSS). The implementation form of the network management device 13 is not limited in the disclosure.

**In** an embodiment, the network management device 13 may be a location manager function (LMF), an access and mobility management function (AMF) or a gateway mobility location center (GMLC). The implementation form of the network management device 13 is not limited in the disclosure.

**In** order to facilitate understanding by those skilled in the art, the embodiments of the disclosure lists a plurality of implementations to clearly explain the technical solution of the embodiments of the disclosure. Certainly, those skilled in the art understand that the embodiments provided by the disclosure may be executed independently, or executed in combination with the methods of other embodiments in the disclosure, and may also be executed independently or together with some methods in related arts after combination, which is not limited in the embodiments of the disclosure.

NTN communication, such as satellite communication, has been applied to more and more application scenarios for its characteristics such as wide coverage, strong disaster resistance and large capacity. The satellite communication refers to communication between radio communication devices on the ground via a satellite as a relay. A satellite communication system consists of a satellite portion and a ground portion.

In the satellite communication system, a long transmission distance leads to a significant deviation in uplink-downlink timing, so that the UE needs to maintain uplink synchronization based on GNSS measurement and assistance information.

In the scenarios of satellite communication, a long signal transmission distance between a transmitting end and a receiving end leads to a long time for data transmission. For transmissions with an uplink-downlink relationship, a delay parameter may be introduced to compensate for a transmission delay. In order to determine the delay parameter, the UE needs to send its position information. The UE may obtain its own position information based on a GNSS and sends the information to a network. However, the position information reported by the UE may be false, or GNSS information of the UE may be tampered with. Therefore, the position information reported by the UE is unreliable for the network side.

FIG. 2 is a flowchart of an information processing method according to an example embodiment. The information processing method is performed by a core network device. As illustrated in FIG. 2, the information processing method includes the following step.

At step 101, first information sent by a base station is received, in which the first information is configured, together with second information from a UE, to determine an RTT of the UE, and the second information includes a measurement value obtained by the UE performing positioning measurement.

In the disclosure, the core network device may be a network element such as an LMF, a GMLC or an AMF.

In some examples, the core network device may be a core network device selected by the UE in case of performing accessing through a NTN.

In some examples, the base station may be a base station in the NTN. For example, the base station may be a terrestrial base station in the NTN, and communication between the base station and the UE is forwarded via a satellite. The base station may be a gNB or an eNB.

In some examples, the UE may be various mobile terminals or fixed terminals. For example, the UE may include, but is not limited to, a mobile phone, a computer, a server, a wearable device, an IoT device, a game control platform, a multimedia device and various sensors.

In some examples, the positioning measurement is used to measure a positioning signal. For example, the positioning measurement may be multi-RTT measurement.

**In** some examples, the first information may include a measurement value obtained by the base station performing the positioning measurement.

The base station performs the positioning measurement, including: the base station measuring a receiving-transmitting (Rx-Tx) timing difference of the positioning signal. The measurement value obtained by the base station performing the positioning measurement may be the Rx-Tx timing difference of the base station.

The UE performs the positioning measurement, including: the UE measuring an Rx-Tx timing difference of the positioning signal. The measurement value obtained by the UE performing the positioning measurement may be the Rx-Tx timing difference of the UE.

The positioning signal of the positioning measurement may include: a downlink positioning reference signal (DL-PRS), a downlink channel-state information reference signal (CSI-RS), a downlink tracking reference signal (TRS) and/or an uplink sounding reference signal (UL-SRS). A downlink reference signal sent by the base station may be forwarded to the UE via the satellite, and the UL-SRS sent by the UE may be forwarded to the base station via the satellite.

**In** some examples, there are a plurality of pieces of first information, and each piece of first information includes the measurement value obtained by the base station performing the positioning measurement.

**In** some examples, a plurality of measurement values obtained by the base station may be obtained by the base station through performing measurements on the positioning signal at different measurement times using the same reference point (also referred to as "measurement reference point") or using a plurality of different reference points.

For example, the base station may obtain a plurality of measurement values by performing measurements on the positioning signal at corresponding different measurement times using a plurality of different reference points on a communication link between the base station and a single satellite.

As another example, the base station may obtain a plurality of measurement values by performing measurements on the positioning signal at the same measurement time or at different measurement times, using a plurality of different reference points on communication links between the base station and a plurality of different satellites.

As yet another example, the base station may obtain a plurality of measurement values by selecting the base station as a common reference point on a communication link between the base station and a single satellite or on communication links between the base station and a plurality of different satellite, and performing measurements on the positioning signal at the same measurement time or at different measurement times.

In some examples, there are a plurality of pieces of second information, and each piece of second information may include the measurement value obtained by the UE performing the positioning measurement. The plurality of measurement values obtained by the UE may be obtained by the UE performing measurements on the positioning signal at different measurement times.

In some examples, the reference point used by the base station for the positioning measurement may be at least one of: a base station, an uplink time synchronization reference point, or a satellite in the NTN. The uplink time synchronization reference point may be different from the satellite and the base station.

In some examples, the RTT of the UE may include: the RTT from the UE to the terrestrial base station in the NTN and/or the RTT from the UE to the satellite in the NTN.

In some examples, when the first information is configured together with the second information to determine the RTT from the UE to the terrestrial base station, the content of the first information may be related to the reference point used by the base station for the positioning measurement.

When the reference points used by the base station for the positioning measurement are different, the content of each piece of the first information sent by the base station to the core network device may be different.

In the disclosure, the first information may be sent by the base station to the core network device according to the reference point used for the positioning measurement.

In some examples, the reference point used by the base station for the positioning measurement is agreed upon by a protocol, or the reference point is indicated by the base station to the core network device.

In an embodiment of the disclosure, the reference point used by the base station for the positioning measurement may be indicated by the base station to the core network device in an explicit or implicit manner.

As an example, the base station may explicitly indicate to the core network device the reference point used by the base station for the positioning measurement by directly reporting information about the reference point to the core network device. For example, identification information of the reference point may be included in the first information sent to the core network device.

As an example, the content of the first information may implicitly indicate to the core network device the reference point used by the base station for the positioning measurement.

For example, when the first information includes a first parameter for determining a common timing advance (TA) and does not include the measurement value obtained by the base station performing the positioning measurement, the content of the first information may indicate that the reference point used by the base station for the positioning measurement is the uplink time synchronization reference point.

As an example, the reference point used by the base station for the positioning measurement may also be pre-selected according to the protocol.

In some examples, the RTT of the UE is used by the core network device to determine the position information of the UE.

The position information of the UE may be represented as a distance between the UE and the base station in the NTN or a distance between the UE and the satellite in the NTN. Alternatively, the position information of the UE may be represented as geographical position information consisting of Earth's longitude and latitude coordinates.

**In** some examples, the plurality of pieces of first information and the plurality of pieces of second information are configured to determine a plurality of RTTs of the UE, for example, determining a plurality of RTTs from the UE to the satellite, or determining a plurality of RTTs from the UE to the terrestrial base station.

For example, the core network device may determine the plurality of RTTs of the UE based on the plurality of measurement values obtained by the base station performing the positioning measurement (for example, the measurement values are included in the first information) and the plurality of measurement values obtained by the UE performing the multi-RTT measurement (for example, the measurement values are included in the second information), and then determine the position information of the UE using the plurality of RTTs of the UE.

**In** the disclosure, the position information determined by the core network device based on the RTT of the UE may be configured to verify position information reported to the core network device by the UE or the base station in the NTN.

The position information reported by the base station to the core network device may be the position information obtained by the UE based on a GNSS or an assisted-GNSS (A-GNSS, which is also known as "network-enhanced satellite positioning system") and reported to the base station. The UE may report the position information during an initial access procedure.

The position information reported by the UE to the core network device may be the position information obtained by the UE based on the GNSS or the A-GNSS.

In some examples, in the above step 101, receiving the first information sent by the base station, may include:
receiving the first information and the second information sent by the base station, in which the second information is sent by the UE to the base station.

The embodiments of the disclosure provide the information processing method. The core network device receives the first information sent by the base station. The first information is configured, together with second information from the UE, to determine the RTT of the UE. The second information includes the measurement value obtained by the UE performing the positioning measurement. Therefore, the core network device may obtain the RTT of the UE by combining the first information from the base station and the second information from the UE. Compared with the position information reported by the UE, this enables the network-side device to use the RTT of the UE to obtain the position information of the UE with higher reliability, thereby verifying whether the position information reported by the UE is accurate.

In an embodiment, the RTT of the UE includes the RTT from the UE to the satellite. When the reference point used by the base station for the positioning measurement is the satellite, the first information includes the measurement value obtained by the base station performing the positioning measurement.

The measurement value obtained by the base station performing the positioning measurement may be: the Rx-Tx timing difference of the base station.

The measurement value obtained by the UE performing the positioning measurement may be: the Rx-Tx timing difference of the UE.

In this embodiment, when the reference point used by the base station for the positioning measurement is the satellite, the core network device may receive the first information sent by the base station containing the measurement value obtained by the base station performing the positioning measurement and the second information containing the measurement value obtained by the UE performing the positioning measurement sent by the UE. Based on the measurement value obtained by the base station performing the positioning measurement and the measurement value obtained by the UE performing the positioning measurement, the core network device may determine the RTT from the UE to the satellite. Therefore, the core network device may use the RTT from the UE to the satellite to obtain the position information of the UE with a higher reliability, thereby verifying whether the position information sent by the UE is accurate.

In an embodiment, the RTT of the UE includes the RTT from the UE to the satellite. When the reference point used by the base station for the positioning measurement is the satellite, the first information or the second information includes information related to a position of the satellite.

The measurement value obtained by the UE performing the positioning measurement may be: the Rx-Tx timing difference of the UE.

The information related to the position of the satellite is configured to determine position information of the satellite. For example, the information related to the position of the satellite may be satellite ephemeris, which may be configured to calculate positions of the satellite at different moments.

In this embodiment, when the reference point used by the base station for the positioning measurement is the satellite, the core network device may receive the first information or the second information containing the information related to the position of the satellite. The core network device may determine the RTT from the UE to the satellite based on the information related to the position of the satellite and the measurement value obtained by the UE performing the positioning measurement included in the second information. In this example, the base station does not need to report the core network device the measurement value obtained by the base station performing the positioning measurement. Therefore, the core network device may use the RTT from the UE to the satellite to obtain the position information of the UE with the higher reliability, thereby verifying whether the position information sent by the UE is accurate.

In an embodiment, the RTT of the UE includes the RTT from the UE to the satellite. When the reference point used by the base station for the positioning measurement is the uplink time synchronization reference point, the first information includes the measurement value obtained by the base station performing the positioning measurement and the first parameter, in which the first parameter is configured for determining the common TA.

The measurement value obtained by the base station performing the positioning measurement may be: the Rx-Tx timing difference of the base station.

The measurement value obtained by the UE performing the positioning measurement may be: the Rx-Tx timing difference of the UE.

The uplink time synchronization reference point is located on a feeder link between the base station and the satellite. For example, the uplink time synchronization reference point may be any reference point on the feeder link between the base station and the satellite that is different from the base station or the satellite.

The common TA is configured to determine the RTT from the uplink time synchronization reference point to the satellite.

The first parameter may carry the common TA or indication information of the common TA.

In this embodiment, when the reference point used by the base station for the positioning measurement is the uplink time synchronization reference point, the core network device may receive the first information sent by the base station and the second information sent by the UE. The first information includes the first parameter for determining the common TA and the measurement value obtained by the base station performing the positioning measurement. The second information includes the measurement value obtained by the UE performing the positioning measurement. The core network device may determine the RTT from the UE to the satellite based on the first parameter, the measurement value obtained by the base station performing the positioning measurement and the measurement value obtained by the UE performing the positioning measurement. Therefore, the core network device may use the RTT from the UE to the satellite to obtain the position information of the UE with the higher reliability, thereby verifying whether the position information sent by the UE is accurate.

In an embodiment, the RTT of the UE includes the RTT from the UE to the satellite. When the reference point used by the base station for the positioning measurement is an uplink time synchronization reference point, the first information includes the first parameter, and the first information or the second information further includes information related to the position of the satellite. The first parameter is configured to determine the common TA.

The measurement value obtained by the UE performing the positioning measurement may be: the Rx-Tx timing difference of the UE.

The uplink time synchronization reference point is located on a feeder link between the base station and the satellite. For example, the uplink time synchronization reference point may be any reference point on the feeder link between the base station and the satellite that is different from the base station or the satellite.

The common TA is configured to determine the RTT from the uplink time synchronization reference point to the satellite.

The first parameter may carry the common TA or the indication information of the common TA.

The information related to the position of the satellite is configured to determine position information of the satellite. For example, the information related to the position of the satellite may be satellite ephemeris, which may be configured to calculate positions of the satellite at different moments.

In this embodiment, when the reference point used by the base station for the positioning measurement is the uplink time synchronization reference point, the core network device may receive the first information sent by the base station and the second information sent by the UE. The first information includes the first parameter for determining the common TA, and the first information or the second information includes the information related to the position of the satellite. The core network device may determine the RTT from the UE to the satellite based on the first parameter, the measurement value obtained by the UE performing the positioning measurement and the information related to the position of the satellite. In the example, the base station does not need to report the core network device the measurement value obtained by the base station performing the positioning measurement. Therefore, the core network device may use the RTT from the UE to the satellite to obtain the position information of the UE with the higher reliability, thereby verifying whether the position information sent by the UE is accurate.

In an embodiment, the RTT of the UE includes the RTT from the UE to the satellite. When the reference point used by the base station for the positioning measurement is the terrestrial base station in the NTN, the first information includes: the measurement value obtained by the base station performing the positioning measurement, the first parameter, and the second parameter, in which the first parameter is configured for determining the common TA, and the second parameter is configured for determining a timing offset.

The measurement value obtained by the base station performing the positioning measurement may be: the Rx-Tx timing difference of the base station.

The measurement value obtained by the UE performing the positioning measurement may be: the Rx-Tx timing difference of the UE.

The common TA is configured to determine the RTT from the uplink time synchronization reference point to the satellite.

The first parameter may carry the common TA or indication information of the common TA.

The timing offset may be configured to determine the RTT from the uplink time synchronization reference point to the terrestrial base station. The timing offset may be a K_mac parameter. For example, the second parameter may carry the timing offset or indication information of the timing offset.

The uplink time synchronization reference point is located on a feeder link between the base station and the satellite. For example, the uplink time synchronization reference point may be any reference point on the feeder link between the base station and the satellite that is different from the base station or the satellite.

In this embodiment, when the reference point used by the base station for the positioning measurement is the terrestrial base station in the NTN, the core network device may receive the first information sent by the base station and the second information sent by the UE. The first information includes the first parameter for determining the common TA, the second parameter for determining the timing offset and the measurement value obtained by the base station performing the positioning measurement. The second information includes the measurement value obtained by the UE performing the positioning measurement. The core network device may determine the RTT from the UE to the satellite based on the first parameter, the second parameter, the measurement value obtained by the base station performing the positioning measurement and the measurement value obtained by the UE performing the positioning measurement. Therefore, the core network device may use the RTT from the UE to the satellite to obtain the position information of the UE with the higher reliability, thereby verifying whether the position information sent by the UE is accurate.

In an embodiment, the RTT of the UE includes the RTT from the UE to the satellite. When the reference point used by the base station for the positioning measurement is the terrestrial base station in the NTN, the first information includes the first parameter and the second parameter, and the first information or the second information further includes information related to the position of the satellite. The first parameter is configured to determine the common TA, and the second parameter is configured to determine the timing offset.

The measurement value obtained by the UE performing the positioning measurement may be: the Rx-Tx timing difference of the UE.

The common TA is configured to determine the RTT from the uplink time synchronization reference point to the satellite.

The first parameter may carry the common TA or indication information of the common TA.

The timing offset may be configured to determine the RTT from the uplink time synchronization reference point to the terrestrial base station. The timing offset may be a K_mac parameter. For example, the second parameter may carry the timing offset or indication information of the timing offset.

The uplink time synchronization reference point is located on the feeder link between the base station and the satellite. For example, the uplink time synchronization reference point may be any reference point on the feeder link between the base station and the satellite that is different from the base station or the satellite.

The information related to the position of the satellite is configured to determine position information of the satellite. For example, the information related to the position of the satellite may be satellite ephemeris, which may be configured to calculate positions of the satellite at different moments.

In this embodiment, when the reference point used by the base station for the positioning measurement is the uplink time synchronization reference point, the core network device may receive the first information sent by the base station and the second information sent by the UE. The first information includes the first parameter for determining the common TA and the second parameter for determining the timing offset. The second information includes the measurement value obtained by the UE performing the positioning measurement. The first information or the second information further includes the information related to the position of the satellite. The core network device may determine the RTT from the UE to the satellite based on the first parameter, the second parameter, the information related to the position of the satellite, and the measurement value obtained by the UE performing the positioning measurement included in the second information. In the example, the base station does not need to report the core network device the measurement value obtained by the base station performing the positioning measurement.

Therefore, the core network device may use the RTT from the UE to the satellite to obtain the position information of the UE with the higher reliability, thereby verifying whether the position information sent by the UE is accurate.

In an embodiment, the RTT of the UE includes the RTT from the UE to the terrestrial base station. The first information includes: the measurement value obtained by the base station performing the positioning measurement, the first parameter, and the second parameter. The first parameter is configured to determine the common TA, and the second parameter is configured to determine the timing offset.

The measurement value obtained by the base station performing the positioning measurement may be: the Rx-Tx timing difference of the base station.

The measurement value obtained by the UE performing the positioning measurement may be: the Rx-Tx timing difference of the UE.

The common TA is configured to determine the RTT from the uplink time synchronization reference point to the satellite.

The timing offset may be configured to determine the RTT from the uplink time synchronization reference point to the terrestrial base station. The timing offset may be a K_mac parameter. For example, the second parameter may carry the timing offset or indication information of the timing offset.

The reference point used by the base station for the positioning measurement includes one of: the satellite, the uplink time synchronization reference point or the terrestrial base station.

The uplink time synchronization reference point is located on the feeder link between the base station and the satellite. For example, the uplink time synchronization reference point may be any reference point on the feeder link between the base station and the satellite.

In this embodiment, when the reference point used by the base station for the positioning measurement is the terrestrial base station in the NTN, the core network device may receive the first information sent by the base station and the second information sent by the UE. The first information includes the first parameter for determining the common TA, the second parameter for determining the timing offset, and the measurement value obtained by the base station performing the positioning measurement. The second information includes the measurement value obtained by the UE performing the positioning measurement. The core network device may determine the RTT from the UE to the terrestrial base station based on the first parameter, the second parameter, the measurement value obtained by the base station performing the positioning measurement and the measurement value obtained by the UE performing the positioning measurement. Therefore, the core network device may use the RTT from the UE to the terrestrial base station to obtain the position information of the UE with the higher reliability, thereby verifying whether the position information sent by the UE is accurate.

In an embodiment, the RTT of the UE includes the RTT from the UE to the terrestrial base station. The first information includes: the first parameter, the second parameter, and the information related to the position of the satellite in the NTN. Alternatively, the first information includes the first parameter and the second parameter, and the second information further includes the information related to the position of the satellite. The first parameter is configured to determine the common TA, and the second parameter is configured to determine the timing offset.

The measurement value obtained by the UE performing the positioning measurement is: the Rx-Tx timing difference of the UE.

The common TA is configured to determine the RTT from the uplink time synchronization reference point to the satellite.

The reference point used by the base station for the positioning measurement includes one of: the satellite, the uplink time synchronization reference point or the terrestrial base station.

The timing offset may be configured to determine the RTT from the uplink time synchronization reference point to the terrestrial base station. The timing offset may be a K_mac parameter. For example, the second parameter may carry the timing offset or indication information of the timing offset.

The uplink time synchronization reference point is located on the feeder link between the base station and the satellite. For example, the uplink time synchronization reference point may be any reference point on the feeder link between the base station and the satellite.

The information related to the position of the satellite is configured to determine position information of the satellite. For example, the information related to the position of the satellite may be satellite ephemeris, which may be configured to calculate positions of the satellite at different moments.

In this embodiment, when the reference point used by the base station for the positioning measurement is the uplink time synchronization reference point, the core network device may receive the first information sent by the base station and the second information sent by the UE. The first information includes the first parameter for determining the common TA, the second parameter for determining the timing offset, and the information related to the position of the satellite. The second information includes the measurement value obtained by the UE performing the positioning measurement. The core network device may determine the RTT from the UE to the terrestrial base station based on the first parameter, the second parameter, the measurement value obtained by the base station performing the positioning measurement and the measurement value obtained by the UE performing the positioning measurement. In the example, the base station does not need to report the measurement value obtained by the base station performing the positioning measurement to the core network device. The information related to the position of the satellite may be included in the second information.

Therefore, the core network device may use the RTT from the UE to the terrestrial base station to obtain the position information of the UE with the higher reliability, thereby verifying whether the position information sent by the UE is accurate.

In an embodiment, the positioning measurement is the multi-RTT measurement, the method includes:
determining position information of the UE based on a plurality of RTTs of the UE.

In some examples, the plurality of RTTs of the UE may include a plurality of RTTs from the UE to the satellite or a plurality of RTTs from the UE to the terrestrial base station.

In some examples, the core network device may determine the position information of the UE according to the plurality of RTTs from the UE to the satellite, or determine the position information of the UE according to the plurality of RTTs from the UE to the terrestrial base station.

In addition, the core network device may determine final position information of the UE in combination with the position information of the UE determined according to the plurality of RTTs from the UE to the satellite and the position information of the UE determined according to the plurality of RTTs from the UE to the terrestrial base station.

In some examples, the method further includes:
verifying, based on the position information determined according to the RTT of the UE, the position information reported by the UE.

For example, when the position information determined according to the RTT of the UE is consistent with the position information reported by the UE, the UE is determined to be a normal UE. When the position information determined according to the RTT of the UE is inconsistent with the position information reported by the UE, the UE is determined to be a malicious UE.

In the embodiments, the core network device may obtain the position information of the UE with the higher reliability according to the plurality of RTTs of the UE, and then verify whether the position information sent by the UE is accurate.

It should be noted that those skilled in the art understand that the methods provided by the embodiments of the disclosure may be executed alone, or may be executed together with some methods in the embodiments of the disclosure or some methods in related arts.

The following information processing method is performed by a base station, which is similar to the description of the above information processing method performed by the core network device. Moreover, the technical details not disclosed in the embodiments of the information processing method performed by the base station can refer to the description of the embodiments of the information processing method performed by the core network device, which is not described in detail here.

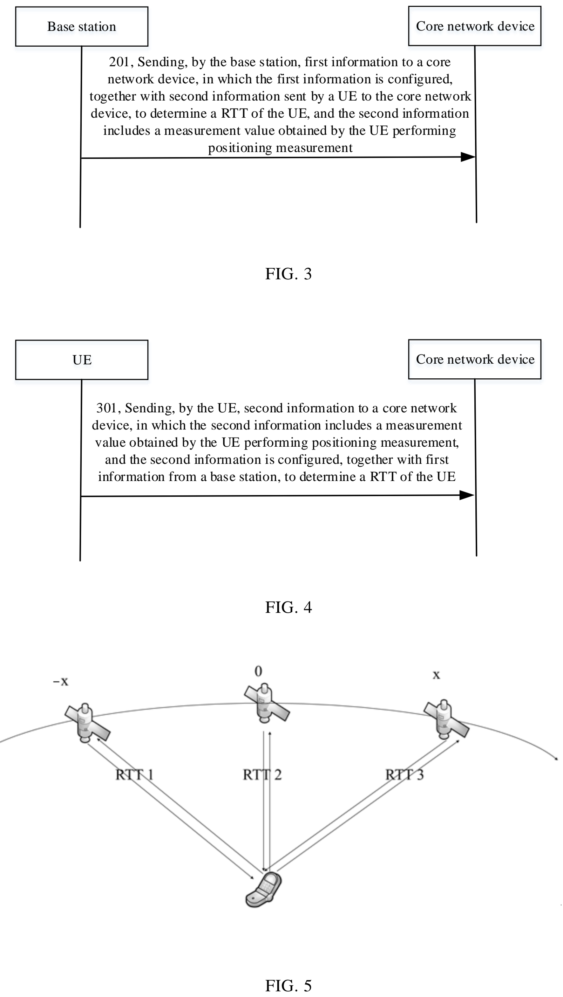

FIG. 3 is a flowchart of an information processing method illustrated according to an example embodiment. The information processing method is performed by a base station. As illustrated in FIG. 3, the information processing method includes the following step.

At step 201, the base station sends first information to a core network device, in which the first information is configured, together with second information sent by a UE to the core network device, to determine an RTT of the UE, and the second information includes a measurement value obtained by the UE performing positioning measurement.

In some examples, the core network device may be a network element such as the LMF, the GMLC or the AMF.

In some examples, the core network device may be a core network device selected by the UE in case of performing accessing through the NTN.

In some examples, the base station may be the base station in the NTN. For example, the base station may be the terrestrial base station in the NTN, and communication between the base station and the UE is forwarded via the satellite.

In some examples, the UE may be various mobile terminals or fixed terminals. For example, the UE may include, but is not limited to, a mobile phone, a computer, a server, a wearable device, an IoT device, a game control platform, a multimedia device and various sensors.

In some examples, the positioning measurement is used to measure a positioning signal. For example, the positioning measurement may be multi-RTT measurement.

In some examples, the reference point used by the base station for the positioning measurement may be at least one of: the satellite, the uplink time synchronization reference point or the base station in the NTN. The uplink time synchronization reference point may be different from the satellite and the base station.

In some examples, the RTT of the UE may include: the RTT from the UE to the terrestrial base station in the NTN and/or the RTT from the UE to the satellite in the NTN.

In this embodiment, the relevant limitations on the first information, the second information, the positioning measurement, the measurement value, the RTT, etc. in step 201 may refer to the description from the perspective of the core network device in the above embodiments, which is not repeated here.

In some examples, in step 201, the base station sending the first information to the core network device includes:
the base station sending the first information and second information to the core network device, in which the second information is sent by the UE to the base station.

Embodiments of the disclosure provide the information processing method. The base station sends the first information to the core network device. The first information is configured, together with second information from the UE, to determine the RTT of the UE. The second information includes the measurement value obtained by the UE performing the positioning measurement. Therefore, the core network device may obtain the RTT of the UE by combining the first information from the base station and the second information from the UE. Compared with the position information reported by the UE, this enables the network-side device to use the RTT of the UE to obtain the position information of the UE with higher reliability, thereby verifying whether the position information reported by the UE is accurate.

In an embodiment, the reference point used by the base station for the positioning measurement is agreed upon in the protocol or is indicated to the core network device by the base station.

In an embodiment, the RTT of the UE includes the RTT from the UE to the satellite. When the reference point used by the base station for the positioning measurement is the satellite, the first information includes the measurement value obtained by the base station performing the positioning measurement; and/or, when the reference point used by the base station for the positioning measurement is the satellite, the first information or the second information includes information related to the position of the satellite.

In an embodiment, the RTT of the UE includes the RTT from the UE to the satellite. When the reference point used by the base station for the positioning measurement is the uplink time synchronization reference point, the first information includes the measurement value obtained by the base station performing the positioning measurement and the first parameter, in which the first parameter is configured for determining the common TA; and/or, when the reference point used by the base station for the positioning measurement is the uplink time synchronization reference point, the first information includes the first parameter, and the first information or the second information further includes information related to the position of the satellite.

In an embodiment, the RTT of the UE includes the RTT from the UE to the satellite. When the reference point used by the base station for the positioning measurement is the terrestrial base station in the NTN, the first information includes: the measurement value obtained by the base station performing the positioning measurement, the first parameter, and the second parameter, in which the first parameter is configured for determining the common TA, and the second parameter is configured for determining a timing offset; and/or, when the reference point used by the base station for the positioning measurement is the terrestrial base station in the NTN, the first information includes the first parameter and the second parameter, and the first information or the second information further includes information related to the position of the satellite.

In an embodiment, the RTT of the UE includes the RTT from the UE to the terrestrial base station. The reference point used by the base station for the positioning measurement includes one of: the satellite in the NTN, the uplink time synchronization reference point or the terrestrial base station.

In an embodiment, the RTT of the UE includes the RTT from the UE to the terrestrial base station. The first information includes: the measurement value obtained by the base station performing the positioning measurement, the first parameter and the second parameter, in which the first parameter is configured to determine the common TA, and the second parameter is configured to determine the timing offset; or the first information includes: the first parameter, the second parameter, and the information related to the position of the satellite in the NTN; or the first information includes the first parameter and the second parameter, and the second information further includes the information related to the position of the satellite.

The above implementations may refer to the description of the above embodiments from the perspective of the core network device, which is not repeated here.

It should be noted that those skilled in the art understand that the method provided in the embodiments of the disclosure may be executed alone, or may be executed together with some methods in the embodiments of the disclosure or some methods in related arts.

The following information processing method is performed by a UE and is similar to the above description of the information processing method performed by the core network device. Moreover, technical details not disclosed in the embodiments of the information processing method performed by the UE can refer to the description of the embodiments of the information processing method performed by the core network device, which is not described in detail.

FIG. 4 is a flowchart of an information processing method illustrated according to an example embodiment. The information processing method is performed by a UE. As illustrated in FIG. 4, the information processing method includes the following step.

At step 301, the UE sends second information to a core network device, in which the second information includes a measurement value obtained by the UE performing positioning measurement, and the second information is configured, together with first information from a base station, to determine an RTT of the UE.

In some examples, the core network device may be a network element such as the LMF, the GMLC or the AMF.

In some examples, the core network device may be a core network device selected by the UE in case of performing accessing through the NTN.

In some examples, the base station may be the base station in the NTN. For example, the base station may be the terrestrial base station in the NTN, and communication between the base station and a UE is forwarded via the satellite.

In some examples, the UE may be various mobile terminals or fixed terminals. For example, the UE may include, but is not limited to, a mobile phone, a computer, a server, a wearable device, an IoT device, a game control platform, a multimedia device and various sensors.

In some examples, the positioning measurement is used to measure a positioning signal. For example, the positioning measurement may be multi-RTT measurement.

In some examples, the reference point used by the base station for the positioning measurement may be at least one of: the satellite, the uplink time synchronization reference point or the base station in the NTN. The uplink time synchronization reference point may be different from the satellite and the base station.

In some examples, the RTT of the UE may include: the RTT from the UE to the terrestrial base station in the NTN and/or the RTT from the UE to the satellite in the NTN.

In this embodiment, the relevant limitations on the first information, the second information, the positioning measurement, the measurement value, the RTT, etc. in step 301 may refer to the description from the perspective of the core network device in the above embodiments, which is not repeated here.

In some examples, in step 301, the UE sending the second information to the core network device includes:
the UE sending the second information to the base station, in which the second information is configured for the base station to send to the core network device.

Embodiments of the disclosure provide the information processing method. The UE sends the second information to the core network device. The second information includes the measurement value obtained by the UE performing the positioning measurement. The second information is configured, together with first information from the base station, to determine the RTT of the UE. Therefore, the core network device may obtain the RTT of the UE by combining the first information from the base station and the second information from the UE. Compared with the position information reported by the UE, this enables the network-side device to use the RTT of the UE to obtain the position information of the UE with higher reliability, thereby verifying whether the position information reported by the UE is accurate.

In an embodiment, the reference point used by the base station for the positioning measurement is agreed upon in the protocol or is indicated to the core network device by the base station.

In an embodiment, the RTT of the UE includes the RTT from the UE to the satellite. When the reference point used by the base station for the positioning measurement is the satellite, the first information includes the measurement value obtained by the base station performing the positioning measurement; or, when the reference point used by the base station for the positioning measurement is the satellite, the first information or the second information includes information related to the position of the satellite.

In an embodiment, the RTT of the UE includes the RTT from the UE to the satellite. When the reference point used by the base station for the positioning measurement is the uplink time synchronization reference point, the first information includes the measurement value obtained by the base station performing the positioning measurement and the first parameter, in which the first parameter is configured for determining the common TA; or, when the reference point used by the base station for the positioning measurement is the uplink time synchronization reference point, the first information includes the first parameter, and the first information or the second information further includes information related to the position of the satellite.

In an embodiment, the RTT of the UE includes the RTT from the UE to the satellite. When the reference point used by the base station for the positioning measurement is the terrestrial base station in the NTN, the first information includes: the measurement value obtained by the base station performing the positioning measurement, the first parameter, and the second parameter, in which the first parameter is configured for determining the common TA, and the second parameter is configured for determining a timing offset; or, when the reference point used by the base station for the positioning measurement is the terrestrial base station in the NTN, the first information includes the first parameter and the second parameter, and the first information or the second information further includes information related to the position of the satellite.

In an embodiment, the RTT of the UE includes the RTT from the UE to the terrestrial base station. The reference point used by the base station for the positioning measurement includes one of: the satellite in the NTN, the uplink time synchronization reference point or the terrestrial base station.

In an embodiment, the RTT of the UE includes the RTT from the UE to the terrestrial base station. The first information includes: the measurement value obtained by the base station performing the positioning measurement, the first parameter and the second parameter, in which the first parameter is configured to determine the common TA, and the second parameter is configured to determine the timing offset; or the first information includes: the first parameter, the second parameter, and the information related to the position of the satellite in the NTN; or the first information includes the first parameter and the second parameter, and the second information further includes the information related to the position of the satellite.

In an embodiment, the RTT of the UE includes the RTT from the UE to the satellite in the NTN.

In an embodiment, the reference point used by the base station for the positioning measurement is agreed upon in the protocol or is indicated to the core network device by the base station.

In an embodiment, the RTT of the UE includes the RTT from the UE to the satellite. When the reference point used by the base station for the positioning measurement is the satellite, the first information includes the measurement value obtained by the base station performing the positioning measurement; or, when the reference point used by the base station for the positioning measurement is the satellite, the first information or the second information includes information related to the position of the satellite.

In an embodiment, the RTT of the UE includes the RTT from the UE to the satellite. When the reference point used by the base station for the positioning measurement is the uplink time synchronization reference point, the first information includes the measurement value obtained by the base station performing the positioning measurement and the first parameter, in which the first parameter is configured for determining the common TA; or, when the reference point used by the base station for the positioning measurement is the uplink time synchronization reference point, the first information includes the first parameter, and the first information or the second information further includes information related to the position of the satellite.

In an embodiment, the RTT of the UE includes the RTT from the UE to the satellite.

When the reference point used by the base station for the positioning measurement is the terrestrial base station in the NTN, the first information includes: the measurement value obtained by the base station performing the positioning measurement, the first parameter, and the second parameter, in which the first parameter is configured for determining the common TA, and the second parameter is configured for determining a timing offset; or, when the reference point used by the base station for the positioning measurement is the terrestrial base station in the NTN, the first information includes the first parameter and the second parameter, and the first information or the second information further includes information related to the position of the satellite.

In an embodiment, the RTT of the UE includes the RTT from the UE to the terrestrial base station.

In an embodiment, the RTT of the UE includes the RTT from the UE to the terrestrial base station. The reference point used by the base station for the positioning measurement includes one of: the satellite in the NTN, the uplink time synchronization reference point or the terrestrial base station.

In an embodiment, the RTT of the UE includes the RTT from the UE to the terrestrial base station.

The first information includes: the measurement value obtained by the base station performing the positioning measurement, the first parameter and the second parameter, in which the first parameter is configured to determine the common TA, and the second parameter is configured to determine the timing offset; or the first information includes: the first parameter, the second parameter, and the information related to the position of the satellite in the NTN; or the first information includes the first parameter and the second parameter, and the second information further includes the information related to the position of the satellite.

The above implementations may refer to the description of the above embodiments from the perspective of the core network device, which is not repeated here.

It should be noted that those skilled in the art understand that the method provided in the embodiments of the disclosure may be executed alone, or may be executed together with some methods in the embodiments of the disclosure or some methods in related arts.

In order to further explain any embodiment of the disclosure, some specific embodiments are provided below.

Embodiments of the disclosure provide an information processing method, which is applicable to a scenario based on network positioning under a satellite communication scenario.

As illustrated in FIG. 5, the multi-RTT measurement is performed by using one satellite at different measurement times (-x, 0, x), to obtain an RTT1 from the UE to the satellite based on a measurement result obtained at the measurement time (-x), an RTT2 from the UE to the satellite based on a measurement result obtained at the measurement time (0), and an RTT3 from the UE to the satellite based on a measurement result obtained at the measurement time (x). Therefore, the position information of the UE may be determined based on the RTT1 from the UE to the satellite, the RTT2 from the UE to the satellite and the RTT3 from the UE to the satellite. In addition, the multi-RTT measurement may also be performed by using different satellites at the same measurement time or different measurement times, to obtain the position information of the UE.

In an embodiment, an information processing method is provided. The method includes:
the core network device determining RTT information of the UE based on a measurement result related to positioning measurement reported by the base station or the UE, in which the RTT information of the UE is configured to determine position information of the UE.

In this way, the network may obtain the position information of the UE effectively, and then verify whether the position information reported by the UE is accurate.

In some examples, the RTT information may be the RTT from the UE to the satellite or the RTT from the UE to the terrestrial base station.

In some examples, when the RTT information is the RTT from the UE to the satellite, the UE or the base station reports information about the reference point to the core network device. Alternatively, the information about the reference point is pre-defined, or the information of the reference point is implicitly determined by the core network device based on reported measurement information.

In some examples, when the RTT information is the RTT from the UE to the satellite, and the reference point for measurement on the base station side is on the satellite side, the measurement result reported by the base station to the core network device may include: the Rx-Tx timing difference on the base station side. The core network device determines the RTT from the UE to the satellite based on the measurement result on the base station side and the measurement result on the UE side (the Rx-Tx timing difference on the UE side).

In some examples, when the RTT information is the RTT from the UE to the satellite, and the reference point for measurement on the base station side is on the satellite side, the base station does not need to report the measurement result. The core network device may learn the RTT information from the UE to the satellite based on the measurement result of the UE. In those examples, the base station or the UE needs to report position information of the satellite for positioning measurement to the core network device.

In some examples, when the RTT information is the RTT from the UE to the satellite, and the reference point for measurement on the base station side is on an uplink synchronization point, the measurement result reported by the base station to the core network device may include: the Rx-Tx timing difference on the base station side and information related to the common TA. The core network device determines the RTT from the UE to the satellite based on the measurement result on the UE side, the measurement result on the base station side and indication information of the common TA.

In some examples, when the RTT information is the RTT from the UE to the satellite, and the reference point for measurement on the base station side is on an uplink synchronization point, the base station only needs to report the information related to the common TA to the core network device. The core network device may know the RTT information from the UE to the satellite based on the measurement result of the UE. In those examples, the base station or the UE needs to report position information of the satellite for positioning measurement to the core network device.

In some examples, when the RTT information is the RTT from the UE to the satellite, and the reference point for measurement on the base station side is on the base station side, the measurement result reported by the base station to the core network device includes: the Rx-Tx timing difference on the base station side, indication information of the common TA and the timing offset (Kmac). The core network device determines the RTT from the UE to the satellite based on the measurement result on the base station side, the measurement result on the UE side, and the indication information of the common TA and the timing offset.

In some examples, when the RTT information is the RTT from the UE to the satellite, and the reference point for measurement on the base station side is on the base station side, the base station only needs to report the indication information of the common TA and the timing offset to the core network device. The core network device determines the RTT from the UE to the satellite based on the measurement result of the UE. In those examples, the base station or the UE needs to report position information of the satellite for positioning measurement to the core network device.

In some examples, when the RTT information is the RTT from the UE to the base station side, regardless of whether the reference point for measurement of the base station is on the satellite side, on the uplink synchronization point, or on the terrestrial base station side: the measurement result reported by the base station to the core network device includes: the Rx-Tx timing difference on the base station side, indication information of the common TA and the timing offset. The core network device determines the RTT from the UE to the base station based on the measurement result on the base station side, the measurement result on the UE side, and the indication information of the common TA and the timing offset.

Alternatively, in some another examples, the base station only needs to report the indication information of the common TA and the timing offset to the core network device. The core network device determines the RTT from the UE to the base station based on the measurement result of the UE. In those examples, the base station or the UE needs to report position information of the satellite for positioning measurement to the core network device.

In the information processing method provided in the embodiments, information related to the positioning measurement that needs to be reported by the base station side is specified in a case where the reference point for the positioning measurement on the base station side are different. Meanwhile, the method for the core network device to determine the positioning reference point is provided, which may effectively enable the core network device to accurately obtain the RTT information from the UE to the satellite or the RTT information from the UE to the base station, thereby determine the position information of the UE. Furthermore, by using the obtained position information, the position information reported by the UE based on GNSS measurement may be verified to determine whether the UE is a malicious UE, which is conducive to ensuring operations of the entire system.

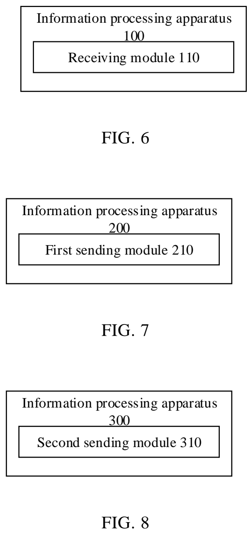

FIG. 6 is a schematic diagram of an information processing apparatus illustrated according to an example embodiment. The information processing apparatus is applied to a core network device. As illustrated in FIG. 6, the information processing apparatus 100 includes:
a receiving module 110, configured to receive first information sent by a base station, in which the first information is configured, together with second information from a UE, to determine an RTT of the UE, and the second information includes a measurement value obtained by the UE performing positioning measurement.

In an embodiment, the RTT of the UE includes: an RTT from the UE to a satellite in a NTN.

In an embodiment, a reference point used by the base station for a positioning measurement is agreed by a protocol or is indicated to the core network device by the base station.

In an embodiment, when where the reference point used by the base station for the positioning measurement is the satellite, the first information includes a measurement value obtained by the base station performing the positioning measurement; or
when the reference point used by the base station for the positioning measurement is the satellite, the first information or the second information includes information related to a position of the satellite.

In an embodiment, when the reference point used by the base station for the positioning measurement is an uplink time synchronization reference point, the first information includes a measurement value obtained by the base station performing the positioning measurement and a first parameter, in which the first parameter is configured for determining a common TA; or
when the reference point used by the base station for the positioning measurement is an uplink time synchronization reference point, the first information includes the first parameter, and the first information or the second information further includes information related to a position of the satellite.

In an embodiment, when the reference point used by the base station for the positioning measurement is a terrestrial base station in the NTN, the first information includes a measurement value obtained by the base station performing the positioning measurement, a first parameter, and a second parameter, in which the first parameter is configured for determining a common TA, and the second parameter is configured for determining a timing offset; or
when the reference point used by the base station for the positioning measurement is a terrestrial base station in the NTN, the first information includes the first parameter and the second parameter, and the first information or the second information further includes information related to a position of the satellite.

In an embodiment, the RTT of the UE includes an RTT from the UE to a terrestrial base station in a NTN.

In an embodiment, a reference point used by the base station for a positioning measurement includes one of:
a satellite in the NTN, an uplink time synchronization reference point or the terrestrial base station.

In an embodiment, the first information includes a measurement value obtained by the base station performing the positioning measurement, a first parameter, and a second parameter, in which the first parameter is configured for determining a common TA, and the second parameter is configured for determining a timing offset; or
the first information includes the first parameter, the second parameter and information related to a position of a satellite in the NTN; or
the first information includes the first parameter and the second parameter, and the second information further includes the information related to the position of the satellite.

In an embodiment, the positioning measurement is multi-RTT measurement, and the information processing apparatus 100 further includes:
a determining module, configured to determine position information of the UE based on a plurality of RTTs of the UE.

With regard to the information processing apparatus in the above embodiments, the specific way in which each module performs operations has been described in detail in the embodiments of the information processing method performed by the core network device, which is not described in detail here.

FIG. 7 is a schematic diagram of another information processing apparatus illustrated according to an example embodiment. The information processing apparatus is applied to a base station. As illustrated in FIG. 7, the information processing apparatus 200 includes:
a first sending module 210, configured to send first information to a core network device, in which the first information is configured, together with second information sent by a UE to the core network device, to determine an RTT of the UE, and the second information includes a measurement value obtained by the UE performing positioning measurement.

In an embodiment, the RTT of the UE includes: an RTT from the UE to a satellite in a NTN.

In an embodiment, a reference point used by the base station a the positioning measurement is agreed by a protocol or is indicated to the core network device by the base station.

In an embodiment, when the reference point used by the base station for the positioning measurement is the satellite, the first information includes a measurement value obtained by the base station performing the positioning measurement; or
when the reference point used by the base station for the positioning measurement is the satellite, the first information or the second information includes information related to a position of the satellite.

In an embodiment, when the reference point used by the base station for the positioning measurement is an uplink time synchronization reference point, the first information includes a measurement value obtained by the base station performing the positioning measurement and a first parameter, in which the first parameter is configured for determining a common TA; or
when the reference point used by the base station for the positioning measurement is an uplink time synchronization reference point, the first information includes the first parameter, and the first information or the second information further includes information related to a position of the satellite.

In an embodiment, when the reference point used by the base station for the positioning measurement is a terrestrial base station in the NTN, the first information includes a measurement value obtained by the base station performing the positioning measurement, a first parameter, and a second parameter, in which the first parameter is configured for determining a common TA, and the second parameter is configured for determining a timing offset; or
when the reference point used by the base station for the positioning measurement is a terrestrial base station in the NTN, the first information includes the first parameter and the second parameter, and the first information or the second information further includes information related to a position of the satellite.

In an embodiment, the RTT of the UE includes an RTT from the UE to a terrestrial base station in a NTN.

In an embodiment, a reference point used by the base station for a positioning measurement includes one of:
a satellite in the NTN, an uplink time synchronization reference point or the terrestrial base station.

In an embodiment, the first information includes a measurement value obtained by the base station performing the positioning measurement, a first parameter, and a second parameter, in which the first parameter is configured for determining a common TA, and the second parameter is configured for determining a timing offset; or
the first information includes the first parameter, the second parameter and information related to a position of a satellite in the NTN; or
the first information includes the first parameter and the second parameter, and the second information further includes the information related to the position of the satellite.

In an embodiment, the positioning measurement is multi-RTT measurement.

With regard to the information processing apparatus in the above embodiment, the specific way in which each module performs operations has been described in detail in the embodiments of the information processing method performed by the base station, which is not described in detail here.

FIG. 8 is a schematic diagram of yet another information processing apparatus illustrated according to an example embodiment. The information processing apparatus is applied to a UE. As illustrated in FIG. 8, the information processing apparatus 300 includes:
a second sending module 310, configured to send second information to a core network device, in which the second information includes a measurement value obtained by the UE performing positioning measurement, and the second information is configured, together with first information from a base station, to determine an RTT of the UE.

In an embodiment, the RTT of the UE includes: an RTT from the UE to a satellite in a NTN.

In an embodiment, a reference point used by the base station for a positioning measurement is agreed upon in a protocol or is indicated to the core network device by the base station.

In an embodiment, when the reference point used by the base station for the positioning measurement is the satellite, the first information includes a measurement value obtained by the base station performing the positioning measurement; or
when the reference point used by the base station for the positioning measurement is the satellite, the first information or the second information includes information related to a position of the satellite.

In an embodiment, when the reference point used by the base station for the positioning measurement is an uplink time synchronization reference point, the first information includes a measurement value obtained by the base station performing the positioning measurement and a first parameter, in which the first parameter is configured for determining a common TA; or
when the reference point used by the base station for the positioning measurement is an uplink time synchronization reference point, the first information includes the first parameter, and the first information or the second information further includes information related to a position of the satellite.

In an embodiment, when the reference point used by the base station for the positioning measurement is a terrestrial base station in the NTN, the first information includes a measurement value obtained by the base station performing the positioning measurement, a first parameter, and a second parameter, in which the first parameter is configured for determining a common TA, and the second parameter is configured for determining a timing offset; or
when the reference point used by the base station for the positioning measurement is a terrestrial base station in the NTN, the first information includes the first parameter and the second parameter, and the first information or the second information further includes information related to a position of the satellite.

In an embodiment, the RTT of the UE includes an RTT from the UE to a terrestrial base station in a NTN.

In an embodiment, the reference point used by the base station for the positioning measurement includes one of:
a satellite in the NTN, an uplink time synchronization reference point or the terrestrial base station.

In an embodiment, the first information includes a measurement value obtained by the base station performing the positioning measurement, a first parameter, and a second parameter, in which the first parameter is configured for determining a common TA, and the second parameter is configured for determining a timing offset; or
the first information includes the first parameter, the second parameter and information related to a position of a satellite in the NTN; or
the first information includes the first parameter and the second parameter, and the second information further includes the information related to the position of the satellite.

In an embodiment, the positioning measurement is multi-RTT measurement.

With regard to the information processing apparatus in the above embodiment, the specific way in which each module performs operations has been described in detail in the embodiments of the information processing method performed by the UE, which is not described in detail here.

An embodiment of the disclosure provides a communication system. The communication system includes: a base station, a UE and a core network device.

The base station is configured to send first information to the core network device, in which the first information is configured, together with second information sent by a UE to the core network device, to determine an RTT of the UE, and the second information includes a measurement value obtained by the UE performing positioning measurement.

The UE is configured to send the second information to the core network device.

The core network device is configured to receive the first information sent by the base station and receive the second information from the UE.

In an embodiment, the RTT of the UE includes: an RTT from the UE to a satellite in a NTN.

In an embodiment, a reference point used by the base station for a positioning measurement is agreed upon in a protocol or is indicated to the core network device by the base station.

In an embodiment, when the reference point used by the base station for the positioning measurement is the satellite, the first information includes a measurement value obtained by the base station performing the positioning measurement; or
when the reference point used by the base station for the positioning measurement is the satellite, the first information or the second information includes information related to a position of the satellite.

In an embodiment, when the reference point used by the base station for the positioning measurement is an uplink time synchronization reference point, the first information includes a measurement value obtained by the base station performing the positioning measurement and a first parameter, in which the first parameter is configured for determining a common TA; or
when the reference point used by the base station for the positioning measurement is an uplink time synchronization reference point, the first information includes the first parameter, and the first information or the second information further includes information related to a position of the satellite.

In an embodiment, when the reference point used by the base station for the positioning measurement is a terrestrial base station in the NTN, the first information includes a measurement value obtained by the base station performing the positioning measurement, a first parameter, and a second parameter, in which the first parameter is configured for determining a common TA, and the second parameter is configured for determining a timing offset; or
when the reference point used by the base station for the positioning measurement is a terrestrial base station in the NTN, the first information includes the first parameter and the second parameter, and the first information or the second information further includes information related to a position of the satellite.

In an embodiment, the RTT of the UE includes an RTT from the UE to a terrestrial base station in a NTN.

In an embodiment, a reference point used by the base station for a positioning measurement includes one of:
a satellite in the NTN, an uplink time synchronization reference point or the terrestrial base station.

In an embodiment, the first information includes a measurement value obtained by the base station performing the positioning measurement, a first parameter, and a second parameter, in which the first parameter is configured for determining a common TA, and the second parameter is configured for determining a timing offset; or
the first information includes the first parameter, the second parameter and information related to a position of a satellite in the NTN; or
the first information includes the first parameter and the second parameter, and the second information further includes the information related to the position of the satellite.

In an embodiment, the positioning measurement is multi-RTT measurement.

In an embodiment, the core network device is configured to determine position information of the UE based on a plurality of RTTs of the UE.

An embodiment of the disclosure provides a communication device. The communication device includes:
a processor; and
a memory for storing instructions executable by the processor.

The processor is configured to implement the information processing method provided by any of the above technical solutions when executing the executable instructions.

The processor may include various types of storage mediums, e.g., non-transitory computer storage mediums, and is able to continue to remember information stored on the communication device after power failure.

The communication device may be a UE, a base station or a core network device.

The processor is connected to the memory through a bus or the like for reading an executable program stored on the memory, for example, the information processing method provided by any of the above technical solutions.

An embodiment of the disclosure provides a computer storage medium. The computer storage medium stores a computer executable program, and when the executable program is executed by a processor, the information processing method of any embodiment of the disclosure is implemented.

With regard to the communication system, the communication device or the storage medium in the above embodiments, the specific way in which each module performs operations has been described in detail in the method embodiments, which is not described in detail here.

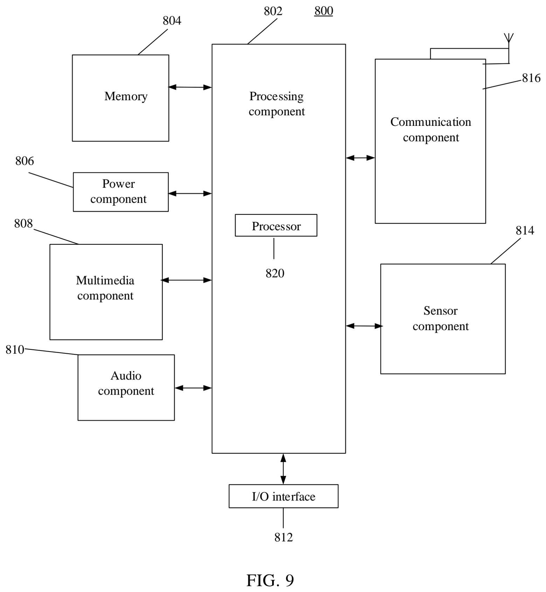

FIG. 9 is a block diagram of a UE 800 illustrated according to an example embodiment. For example, the UE 800 may be a mobile phone, a computer, a digital broadcasting UE, a message transceiver device, a game console, a tablet device, a medical device, a fitness device or a personal digital assistant.

As illustrated in FIG. 9, the UE 800 includes one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 includes one or more processors 820 to perform all or part of the steps in the above described methods. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, videos, etc. The memory 804 may be implemented using any type of volatile or non-volatile memory devices, or a combination thereof, such as a static random-access memory (SRAM), an electrically-erasable programmable read only memory (EEPROM), an erasable programmable read only memory (EPROM), a programmable read only memory (PROM), a read only memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In an embodiment, the screen may include a liquid crystal display (LCD) and a touch panel (TP). If the screen includes the TP, the screen may be implemented as a touch screen to receive input signals from the user. The TP includes one or more touch sensors to sense touches, swipes, and gestures on the TP. The touch sensor may not only sense a boundary of a touch or swipe action, but also sense a period of wakeup time and a pressure associated with the touch or swipe action. In an embodiment, the multimedia component 808 includes a front-facing camera and/or a rear-facing camera. When the UE 800 is in an operating mode, such as a shooting mode or a video mode, the front-facing camera and/or the rear-facing camera can receive external multimedia data. Each front-facing camera or rear-facing camera may be a fixed optical lens system or has focal length and optical zoom capability.

The audio component 810 is configured to output and/or input audio signals. For example, the audio component 810 includes a microphone (MIC) configured to receive external audio signals when the UE 800 is in an operation mode, such as a call mode, a recording mode, and a voice recognition mode. The received audio signal may be further stored in the memory 804 or transmitted via the communication component 816. In an embodiment, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For example, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a complementary metal oxide semiconductor (CMOS) or charge-coupled device (CCD) image sensor, for use in imaging applications. In an embodiment, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as wireless fidelity (Wi-Fi), 4G or 5G, or a combination thereof. In an example embodiment, the communication component 816 receives a broadcast signal or broadcast associated information from an external broadcast management system via a broadcast channel. In an example embodiment, the communication component 816 further includes a near field communication (NFC) module to facilitate short-range communication. For example, the NFC module may be implemented based on a radio frequency identification (RFID) technology, an infrared data association (IrDA) technology, an ultra-wide band (UWB) technology, a Bluetooth (BT) technology, and other technologies.

**In** an example embodiment, the UE 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for implementing the above information processing method performed by the UE.

In an example embodiment, there is also provided a non-transitory computer readable storage medium including instructions, such as the memory 804, executable by the processor 820 in the UE 800, for implementing the above information processing method. For example, the non-transitory computer-readable storage medium may be a ROM, a random access memory (RAM), a CD-ROM, a magnetic tape, a floppy disc, or an optical data storage device.

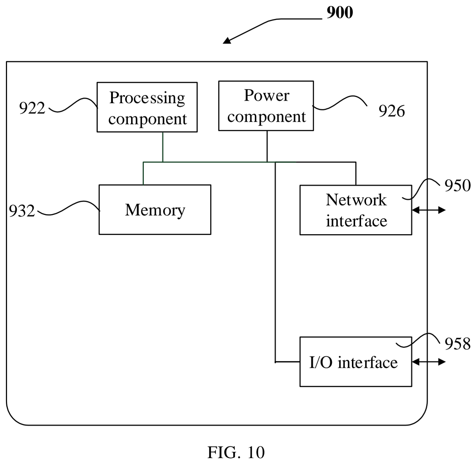

As illustrated in FIG. 10, an embodiment of the disclosure illustrates the structure of a communication device 900. For example, the communication device 900 may be provided as a network side device, or the communication device may be the base station and/or the core network device described above.

As illustrated in FIG. 10, the communication device 900 includes a processing component 922 consisting of one or more processors, and memory resources represented by a memory 932 for storing instructions executable by the processing component 922, such as applications. An application program stored in the memory 932 may include one or more modules each corresponding to a set of instructions. In addition, the processing component 922 is configured to execute the instructions to perform the method performed by the core network device and/or the method performed by the base station.

The communication device 900 may also include a power component 926 configured to perform power management of the communication device 900, a wired or wireless network interface 950 configured to connect the communication device 900 to a network, and an I/O interface 958. The communication device 900 may operate based on an operating system stored in the memory 932, such as Windows Server TM, Mac OS XTM, UnixTM, LinuxTM, FreeBSDTM, or the like.

Each of the steps in a certain implementation or embodiment can be implemented as an independent embodiment, or the steps can be combined arbitrarily without conflict. For example, the solution after removing some steps in the implementation or embodiment can also be implemented as an independent embodiment, and the order of the steps in the implementation or embodiment can be exchanged arbitrarily. Moreover, optional modes or examples in the implementation or embodiment can also be combined arbitrarily. In addition, different implementations or embodiments can be combined arbitrarily. For example, some or all of the steps in these implementations or embodiments can be combined arbitrarily, or a certain implementation or embodiment can be combined arbitrarily with optional modes or examples of other implementations or embodiments.

Other implementations of the disclosure are apparent to those skilled in the art from consideration of the specification and the practice of the disclosure disclosed here. The disclosure is intended to cover any variations, uses, or adaptations of the disclosure following the general principles thereof and including such departures from the disclosure as come within known or customary practice in the art. It is intended that the specification and the embodiments be considered as exemplary only, with a true scope and spirit of the disclosure being indicated by the attached claims.

It should be noted that the disclosure is not limited to the exact construction that has been described above and illustrated in the accompanying drawings, and that various modifications and changes can be made without departing from the scope thereof. It is intended that the scope of the disclosure only be limited by the attached claims.

## Claims

1. An information processing method, performed by a core network device, comprising:
receiving first information sent by a base station, wherein the first information is configured, together with second information from a user equipment (UE), to determine a round trip time (RTT) of the UE, and the second information comprises a measurement value obtained by the UE performing positioning measurement.

2. The method of claim 1, wherein the RTT of the UE comprises: an RTT from the UE to a satellite in a non-terrestrial network (NTN).

3. The method of claim 2, wherein a reference point used by the base station for a positioning measurement is agreed by a protocol or is indicated to the core network device by the base station.

4. The method of claim 2 or 3, wherein
in a case where the reference point used by the base station for the positioning measurement is the satellite, the first information comprises a measurement value obtained by the base station performing the positioning measurement;
or
in a case where the reference point used by the base station for the positioning measurement is the satellite, the first information or the second information comprises information related to a position of the satellite.

5. The method of claim 2 or 3, wherein
in a case where the reference point used by the base station for the positioning measurement is an uplink time synchronization reference point, the first information comprises a measurement value obtained by the base station performing the positioning measurement and a first parameter, wherein the first parameter is configured for determining a common timing advance (TA);
or
in a case where the reference point used by the base station for the positioning measurement is an uplink time synchronization reference point, the first information comprises the first parameter, and the first information or the second information further comprises information related to a position of the satellite.

6. The method of claim 2 or 3, wherein
in a case where the reference point used by the base station for the positioning measurement is a terrestrial base station in the NTN, the first information comprises a measurement value obtained by the base station performing the positioning measurement, a first parameter, and a second parameter, wherein the first parameter is configured for determining a common TA, and the second parameter is configured for determining a timing offset;
or
in a case where the reference point used by the base station for the positioning measurement is a terrestrial base station in the NTN, the first information comprises the first parameter and the second parameter, and the first information or the second information further comprises information related to a position of the satellite.

7. The method of claim 1, wherein the RTT of the UE comprises an RTT from the UE to a terrestrial base station in a NTN.

8. The method of claim 7, wherein a reference point used by the base station for a positioning measurement comprises one of:
a satellite in the NTN, an uplink time synchronization reference point or the terrestrial base station.

9. The method of claim 7 or 8, wherein
the first information comprises a measurement value obtained by the base station performing the positioning measurement, a first parameter, and a second parameter, wherein the first parameter is configured for determining a common TA, and the second parameter is configured for determining a timing offset;
or
the first information comprises the first parameter, the second parameter and information related to a position of a satellite in the NTN;
or
the first information comprises the first parameter and the second parameter, and the second information further comprises the information related to the position of the satellite.

10. The method of any one of claims 1-9, wherein the positioning measurement is multi-RTT measurement, and the method comprises:
determining position information of the UE based on a plurality of RTTs of the UE.

11. An information processing method, performed by a base station, comprising:
sending, by the base station, first information to a core network device, wherein the first information is configured, together with second information sent by a user equipment (UE) to the core network device, to determine a round trip time (RTT) of the UE, and the second information comprises a measurement value obtained by the UE performing positioning measurement.

12. The method of claim 11, wherein the RTT of the UE comprises: an RTT from the UE to a satellite in a non-terrestrial network (NTN).

13. The method of claim 12, wherein a reference point used by the base station for a positioning measurement is agreed by a protocol or is indicated to the core network device by the base station.

14. The method of claim 12 or 13, wherein
in a case where the reference point used by the base station for the positioning measurement is the satellite, the first information comprises a measurement value obtained by the base station performing the positioning measurement;
or
in a case where the reference point used by the base station for the positioning measurement is the satellite, the first information or the second information comprises information related to a position of the satellite.

15. The method of claim 12 or 13, wherein
in a case where the reference point used by the base station for the positioning measurement is an uplink time synchronization reference point, the first information comprises a measurement value obtained by the base station performing the positioning measurement and a first parameter, wherein the first parameter is configured for determining a common timing advance (TA);
or
in a case where the reference point used by the base station for the positioning measurement is an uplink time synchronization reference point, the first information comprises the first parameter, and the first information or the second information further comprises information related to a position of the satellite.

16. The method of claim 12 or 13, wherein
in a case where the reference point used by the base station for the positioning measurement is a terrestrial base station in the NTN, the first information comprises a measurement value obtained by the base station performing the positioning measurement, a first parameter, and a second parameter, wherein the first parameter is configured for determining a common TA, and the second parameter is configured for determining a timing offset;
or
in a case where the reference point used by the base station for the positioning measurement is a terrestrial base station in the NTN, the first information comprises the first parameter and the second parameter, and the first information or the second information further comprises information related to a position of the satellite.

17. The method of claim 11, wherein the RTT of the UE comprises an RTT from the UE to a terrestrial base station in a NTN.

18. The method of claim 17, wherein a reference point used by the base station for a positioning measurement comprises one of:
a satellite in the NTN, an uplink time synchronization reference point or the terrestrial base station.

19. The method of claim 17 or 18, wherein
the first information comprises a measurement value obtained by the base station performing the positioning measurement, a first parameter, and a second parameter, wherein the first parameter is configured for determining a common TA, and the second parameter is configured for determining a timing offset;
or
the first information comprises the first parameter, the second parameter and information related to a position of a satellite in the NTN;
or
the first information comprises the first parameter and the second parameter, and the second information further comprises the information related to the position of the satellite.

20. The method of any one of claims 11-19, wherein the positioning measurement is multi-RTT measurement.

21. An information processing method, performed by a user equipment (UE), comprising:
sending, by the UE, second information to a core network device, wherein the second information comprises a measurement value obtained by the UE performing positioning measurement, and the second information is configured, together with first information from a base station, to determine a round trip time (RTT) of the UE.

22. The method of claim 21, wherein the RTT of the UE comprises: an RTT from the UE to a satellite in a non-terrestrial network (NTN).

23. The method of claim 22, wherein a reference point used by the base station for a positioning measurement is agreed by a protocol or is indicated to the core network device by the base station.

24. The method of claim 22 or 23, wherein
in a case where the reference point used by the base station for the positioning measurement is the satellite, the first information comprises a measurement value obtained by the base station performing the positioning measurement;
or
in a case where the reference point used by the base station for the positioning measurement is the satellite, the first information or the second information comprises information related to a position of the satellite.

25. The method of claim 22 or 23, wherein
in a case where the reference point used by the base station for the positioning measurement is an uplink time synchronization reference point, the first information comprises a measurement value obtained by the base station performing the positioning measurement and a first parameter, wherein the first parameter is configured for determining a common timing advance (TA);
or
in a case where the reference point used by the base station for the positioning measurement is an uplink time synchronization reference point, the first information comprises the first parameter, and the first information or the second information further comprises information related to a position of the satellite.

26. The method of claim 22 or 23, wherein
in a case where the reference point used by the base station for the positioning measurement is a terrestrial base station in the NTN, the first information comprises a measurement value obtained by the base station performing the positioning measurement, a first parameter, and a second parameter, wherein the first parameter is configured for determining a common TA, and the second parameter is configured for determining a timing offset;
or
in a case where the reference point used by the base station for the positioning measurement is a terrestrial base station in the NTN, the first information comprises the first parameter and the second parameter, and the first information or the second information further comprises information related to a position of the satellite.

27. The method of claim 21, wherein the RTT of the UE comprises an RTT from the UE to a terrestrial base station in a NTN.

28. The method of claim 27, wherein a reference point used by the base station for a positioning measurement comprises one of:
a satellite in the NTN, an uplink time synchronization reference point or the terrestrial base station.

29. The method of claim 27 or 28, wherein
the first information comprises a measurement value obtained by the base station performing the positioning measurement, a first parameter, and a second parameter, wherein the first parameter is configured for determining a common TA, and the second parameter is configured for determining a timing offset;
or
the first information comprises the first parameter, the second parameter and information related to a position of a satellite in the NTN;
or
the first information comprises the first parameter and the second parameter, and the second information further comprises the information related to the position of the satellite.

30. The method of any one of claims 21-29, wherein the positioning measurement is multi-RTT measurement.

31. An information processing apparatus, applied to a core network device, comprising:
a receiving module, configured to receive first information sent by a base station, wherein the first information is configured, together with second information from a user equipment (UE), to determine a round trip time (RTT) of the UE, and the second information comprises a measurement value obtained by the UE performing positioning measurement.

32. An information processing apparatus, applied to a base station, comprising:
a first sending module, configured to send first information to a core network device, wherein the first information is configured, together with second information sent by a user equipment (UE) to the core network device, to determine a round trip time (RTT) of the UE, and the second information comprises a measurement value obtained by the UE performing positioning measurement.

33. An information processing apparatus, applied to a user equipment (UE), comprising:
a second sending module, configured to send second information to a core network device, wherein the second information comprises a measurement value obtained by the UE performing positioning measurement, and the second information is configured, together with first information from a base station, to determine a round trip time (RTT) of the UE.

34. A communication system, comprising a base station, a user equipment (UE) and a core network device, wherein the core network device is configured to implement the information processing method of any one of claims 1-10, the base station is configured to implement the information processing method of any one of claims 11-20, and the UE is configured to implement the information processing method of any one of claims 21-30.

35. A communication device, comprising:
a processor; and
a memory for storing instructions executable by the processor;
wherein the processor is configured to implement the information processing method of any one of claims 1-10, the information processing method of any one of claims 11-20, or the information processing method of any one of claims 21-30 by executing the executable instructions.

36. A computer storage medium storing a computer executable program, wherein in a case where the computer executable program is executed by a processor, the information processing method of any one of claims 1-10, the information processing method of any one of claims 11-20, or the information processing method of any one of claims 21-30 is implemented.
